# EUROPÄISCHE PATENTSCHRIFT

(11) **EP 0 887 173 B1**
(45) Veröffentlichungstag und Bekanntmachung des Hinweises auf die Patenterteilung: **06.11.2002**
(21) Anmeldenummer: 98110995.2
(22) Anmeldetag: 16.06.1998
(51) Int. Cl.: B29C 49/42

(54) **Verfahren und Vorrichtung zum Blasformen von gekrümmten Hohlkörpern aus thermoplastischem Kunststoff**
Process and apparatus for blow moulding of curved hollow thermoplastic articles
Procédé et dispositif pour le moulage par soufflage de corps creux cintrés en matière thermoplastique

(30) Priorität: 27.06.1997 DE 19727366
(43) Veröffentlichungstag der Anmeldung: 30.12.1998
(73) Patentinhaber: SIG Kautex GmbH & Co. KG, 53229 Bonn (DE)
(72) Erfinder: Klein, Martin, 53757 St. Augustin (DE)
(74) Vertreter: Patentanwälte Lippert, Stachow, Schmidt & Partner

(56) Entgegenhaltungen:
- WO-A-96/28295
- DE-A- 3 737 453
- DE-C- 4 305 735
- US-A- 5 264 178
- PATENT ABSTRACTS OF JAPAN vol. 018, no. 272 (M-1610), 24. Mai 1994 & JP 06 047803 A (TOYODA GOSEI CO LTD), 22. Februar 1994
- PATENT ABSTRACTS OF JAPAN vol. 016, no. 111 (M-1223), 18. März 1992 & JP 03 281325 A (TOYODA GOSEI CO LTD), 12. Dezember 1991
- PATENT ABSTRACTS OF JAPAN vol. 016, no. 072 (M-1213), 21. Februar 1992 & JP 03 261534 A (PLACO CO LTD), 21. November 1991

## Beschreibung

Die Erfindung betrifft ein Verfahren und eine Vorrichtung gemäß dem Oberbegriff des Anspruchs 1 bzw. dem des Anspruchs 7.

Ein solches Verfahren und eine solche Vorrichtung sind aus der US-A-5 264 178 bekannt.

Bei der Herstellung von kompliziert gestalteten, insbesondere dreiachsig gekrümmten langgestreckten Hohlkörpern, z. B. Rohren oder ähnlichen Teilen, im Extrusions-Blasverfahren ist es bekannt, den im allgemeinen schlauchförmigen Vorformling in das Formnest eines liegend angeordneten Formteils der mehrteiligen Blasform so einzubringen, daß der Vorformling vor Beginn des Blasvorganges zumindest über große Teile seiner Längserstreckung dem Verlauf des entsprechend kompliziert gestalteten Formnnestes folgend sich innerhalb desselben, d. h., zwischen den beiden in Längsrichtung des Formnestes verlaufenden Begrenzungskanten desselben befindet, also keinen größeren Durchmesser aufweist als der Breite des Formnestes entspricht. Auf diese Weise wird erreicht, daß beim Schließen der Blasform durch Gegenenanderbewegen der beiden - oder mehreren - Blasformteile kein oder nur wenig Überschußmaterial vom Vorformling bzw. dem daraus herzustellenden Hohlkörper seitlich, also entlang dem Längsverlauf der seitlichen Begrenzungskanten, abgequetscht wird. Dadurch wird das Entstehen von Abfallteilen und auch von Schwachstellen am fertigen Hohlkörper vermieden. Nach dem Schließen der Blasform wird der Vorformling durch inneren Überdruck in üblicher Weise aufgeweitet, wobei jedoch bei der Herstellung von rohrförmigen Hohlkörpern das Ausmaß dieser Aufweitung im allgemeinen nicht sehr groß ist.

Das Einlegen des Vorformlings in das Formnest wird üblicherweise so durchgeführt, daß entweder der Extruder mit dem Extrusionskopf gegenüber dem stationären Formteil, welches den Vorformling aufnimmt, entsprechend dem Verlauf des Formnestes bewegt wird oder das Formteil gegenüber dem vertikal bewegbaren, also absenkbaren Extrusionskopf in horizontaler Ebene bewegt wird. In beiden Fällen sind erhebliche Massen zu bewegen mit der Folge, daß auch die dafür erforderlichen Antriebe entsprechend kompliziert und aufwendig sind.

In US-A-5264178 ist ein Verfahren beschrieben, bei welchem der Vorformling, nachdem ein Teilabschnitt desselben in das nichtlineare Formnest eingelegt worden war, von einem Greifer erfaßt wird, welcher den restlichen Abschnitt des Vorformlings in das Formnest einlegt. Dabei wird jedoch so vorgegangen, daß das den Vorformling aufnehmende Formteil zur Anpassung der Lage des von ihm getragenen Formnestes an die Position des Greifers bzw. die des Vorformlings eine lineare Verschiebung erfährt und der Greifer Bewegungen in anderen Richtungen ausführt, die erforderlich sind, damit der Vorformling dem Verlauf des Formnestes folgt.

JP-A-06047803 offenbart ein Blasformverfahren, bei welchem der Vorformling direkt aus dem Extrusionskopf in das Formnest extrudiert wird, welches sich in dem unteren Formteil einer unterteilten Blasform befindet. Letztere ist an den stark gekrümmten Bereichen des Formnestes mit anschlagartigen Führungen versehen, die das Einbringen des schlauchförmigen Vorformlings im Bereich dieser Führungen in das Formnest erleichtern sollen.

Es ist ferner aus DE 43 05 735 C1 bekannt, bei einer Extrusions-Blasvorrichtng zum Herstellen von mehrachsigen Hohlkörpern aus Kunststoff zwischen dem Extrusionskopf und der Blasform eine Vorform anzuordnen, die der Gestalt des Formnestes der Blasform angepaßt ist und eine offene Formmulde aufweist, die mindestens in ihrer Schlauchaufnahmestellung unter dem Extrusionskopf in zwei waagerechten Richtungen verschiebbar und in senkrechter Richtung heb- und senkbar ist. Diese Vorform nimmt zunächst den Vorformling auf, um ihn dann an das Formnest des liegend angeordneten Blasformteiles abzugeben. Diese Ausgestaltung vermeidet zwar das Bewegen der schweren Blasform sowie das Bewegen des Extruders in horizontaler Ebene. Dazu ist jedoch eine besondere Formmulde erforderlich, die zudem so ausgebildet sein muß, daß bei der Abgabe des Vorformlings an das Formnest des Blasformteils der Vorformling immer in der richtigen Position bleibt und keine unzulässigen Beanspruchungen erfährt.

Demzufolge liegt der Erfindung die Aufgabe zugrunde, Verfahren und Vorrichtung der einleitend beschriebenen Art so auszugestalten, daß nur kleine Massen zu bewegen sind, ohne daß dadurch die Genauigkeit, mit welcher der Vorformling in das Formnest des ihn aufnehmenden Formteils eingelegt werden kann, abnimmt. Die zur Erreichung dieses Ziels erforderlichen Mittel sollen bezüglich Herstellung und Handhabung einfach sein, so daß sie kostenmäßig vernachlässigbar sind.

Diese Aufgabe wird mit den im Anspruch 1 bzw. im Anspruch 7 angegebenen Verfahrensschritten bzw. Mitteln gelöst.

Bei Verwendung eines Greifers für das Einlegen des Vorformlings in das Formnest wird der Vorformling zunächst in seiner gesamten Länge extrudiert, bevor er in das Formnest eingelegt werden kann. Es liegt auf der Hand, daß in der ersten Phase dieses Einlegevorganges, wenn der noch vom Greifer gehaltene Abschnitt des Vorformlings relativ lang ist, der jeweils untere Bereich des Vorformlings, der an den Abschnitt anschließt, der bereits im Formnest liegt, den seitlichen Bewegungen des Greifers, die durch den Verlauf des Formnestes bestimmt werden, nur mit einer gewissen Verzögerung folgt. Eine dadurch unter Umständen verursachte Verlangsamung des Einlegevorganges kann durch die Führungsschablone vermieden werden, da es aufgrund des Vorhandenseins der letzteren nicht mehr erforderlich ist, mit dem Greifer dem Verlauf des Formnestes mit großer Genauigkeit zu folgen. Vielmehr reicht es normalerweise aus, den Vorformling in den oberen Bereich der Führungsschablone einzulegen, der wesentlich breiter ist als das Formnest und somit bezüglich der Bewegungen des Vorformlings eine gewisse "Toleranz" erlaubt. Der Vorformling bewegt sich unter der Einwirkung seines Gewichtes ohnehin durch die nach unten sich verengende Schablonenführung zum Formnest hin, wobei er zwangsläufig zu diesem ausgerichtet wird und letztlich unter der Einwirkung seines Gewichtes in dieses hineingleitet.

Die Verwendung eines Greifers für den Transport des Vorformlings in das ihn aufnehmende Blasformteil hat zur Folge, daß nur geringe Massen bewegt zu werden brauchen. Zudem ist es möglich, den Greifer unabhängig vom Extrusionssystem und von der Blasform anzuordnen und zu bewegen, so daß die motorischen Antriebsmittel die für die Bewegungen des Greifers erforderlich sind, einfach und leicht sein können. Ferner sind auch ihre Anordnung und Anbringung unkompliziert, da auf das Vorhandensein anderer Teile und Antriebe keine Rücksicht genommen zu werden braucht.

Da die Führungsschablone keinerlei Beanspruchungen ausgesetzt ist, insbesondere keinerlei Kräfte aufzunehmen braucht, kann sie einfach und leicht ausgebildet, beispielsweise aus Blech oder Kunststoff hergestellt sein. Die Einfachheit der Führungsschablone und der dafür erforderliche geringe Aufwand machen Verfahren und Vorrichtung gemäß der Erfindung insbesondere auch für die Anwendung bei kleinen Serien geeignet.

Ein weiterer Vorteil der Erfindung besteht darin, daß das Einlegen des Vorformlings in das Formnest des ihn aufnehmenden Formteils unabhängig von der Extrusionsgeschwindigkeit, also ggf. in kürzerer Zeit erfolgen kann als dies bei bekannten Verfahren möglich ist, bei denen der Vorformling unmittelbar in das Formnest des ihn aufnehmenden Formteils hineinextrudiert wird.

Der durch die Erfindung erzielbare Vorteil wird insbesondere bei solchen Materialien deutlich, die in warmplastischem Zustand eine verhältnismäßig große Viskosität aufweisen und daher zu relativ steifen Vorformlingen führen. Die Viskosität hängt im allgemeinen von der Art des zu verarbeitenden Kunststoffes ab. Sie kann aber auch durch dem Kunststoff zugemischte Substanzen oder Komponenten, beispielsweise Glasfasern, beeinflußt werden. Dabei kann die Führungsschablone es ermöglichen, den Greifer mit möglichst kurzen Steuerbewegungen zu fahren, um ein Einknicken des Vorformlings selbst bei engen Bögen zu vermeiden und somit den Vorformling trotz seiner Steifigkeit sicher in die Form zu bringen.

In jedem Fall wird durch die Verwendung der Führungsschablone erreicht, daß beim Einlegen durch den Greifer auf eine genaue Ausrichtung des Vorformlings zum Verlauf des Formnestes verzichtet werden kann. Es ist lediglich erforderlich, dem Verlauf der oberseitig sehr viel breiteren Führungsschablone zu folgen. Die genaue Ausrichtung des Vorformlings zum Formnest erfolgt dann beim Hindurchgleiten des Vorformlings durch die Führungsschablone in das darunter befindliche Formnest, wobei die schräg verlaufenden Wandungen der Führungsschablone eine "Zentrierung" des Vorformlings zum Formnest bewirken.

Es besteht auch die Möglichkeit, auf den in der Führungsschablone befindlichen Schlauch einen gewissen nach unten gerichteten Druck auszuüben, um das Hineingleiten des Vorformlings in das Formnest zu beschleunigen, ggf. auch zu vergleichmäßigen. In Abhängigkeit von der Gestalt des Formnestes und damit vom Verlauf auch der Führungsschablone ist es insbesondere bei höherviskosen Materialien möglich, daß Abschnitte des Vorformlings, die sich im Bereich von Krümmungen mit kleinem Radius des Formnestes bzw. der Führungsschablone befinden, langsamer in das Formnest hineingleiten als es bei Abschnitten des Vorformlings der Fall ist, die sich in linearen oder weniger stark gekrümmten Bereichen der Führungsschablone befinden. Allerdings wird in jedem Fall, also unabhängig davon, ob ein zusätzlicher Druck auf den Vorformling oder Abschnitte desselben ausgeübt wird, insbesondere in gekrümmten Bereichen mit kleinem Radius das Einlegen des Vorformlings in das Formnest bei Anwendung der Erfindung wesentlich vereinfacht und beschleunigt.

In der Zeichnung sind zwei Ausführungsbeispiele der Erfindung im Schema dargestellt. Es zeigen:
- Fig. 1: in perspektivischer Ansicht einen gekrümmten rohrförmigen Hohlkörper,
- Fig. 2: eine Ansicht dieses Hohlkörpers etwa in Richtung des Pfeiles II der Fig. 1,
- Fig. 3: eine Ansicht dieses Hohlkörpers etwa in Richtung des Pfeiles III der Fig. 2,
- Fig. 4: ein liegend angeordnetes Blasformteil mit darüber angeordneter Führungsschablone, teilweise im Schnitt,
- Fig. 5: eine dem Ausschnitt V der Fig. 4 entsprechende Darstellung, die lediglich Blasformteil und Führungsschablone einer zweiten Ausführung zeigt,
- Fig. 6: eine Ansicht in Richtung der Pfeile VI-VI der Fig. 4,
- Fig. 7: eine der Fig. 4 entsprechende Ansicht der zweiteiligen Blasform mit aus dem Bereich der Öffnungs- und Schließbewegungen der Blasformteile entfernter Führungsschablone.

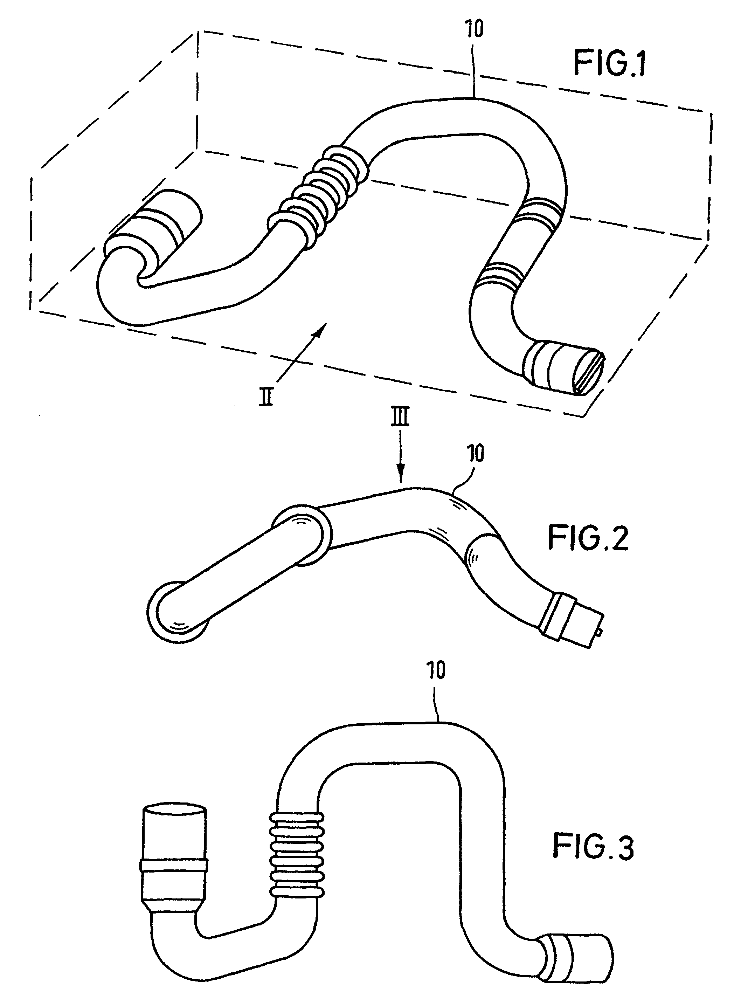

Der in den Fig. 1 - 3 lediglich als Ausführungsbeispiel dargestellte rohrförmige Hohlkörper ist sehr unregelmäßig geformt, insbesondere mehrfach im Raum gekrümmt ausgeführt. Zur Herstellung dieses Hohlkörpers wird ein schlauchförmiger Vorformling 12, der aus dem Extrusionskopf 14 eines in der Zeichnung nicht näher dargestellten Extrusionssystems extrudiert worden ist, zunächst in das Formnest 16 eines unteren Formteils 18 eingelegt und dann nach Schließen der aus den beiden Formteilen 18 und 20 bestehenden Blasform darin durch Innenund Überdruck zum Hohlkörper aufgeweitet.

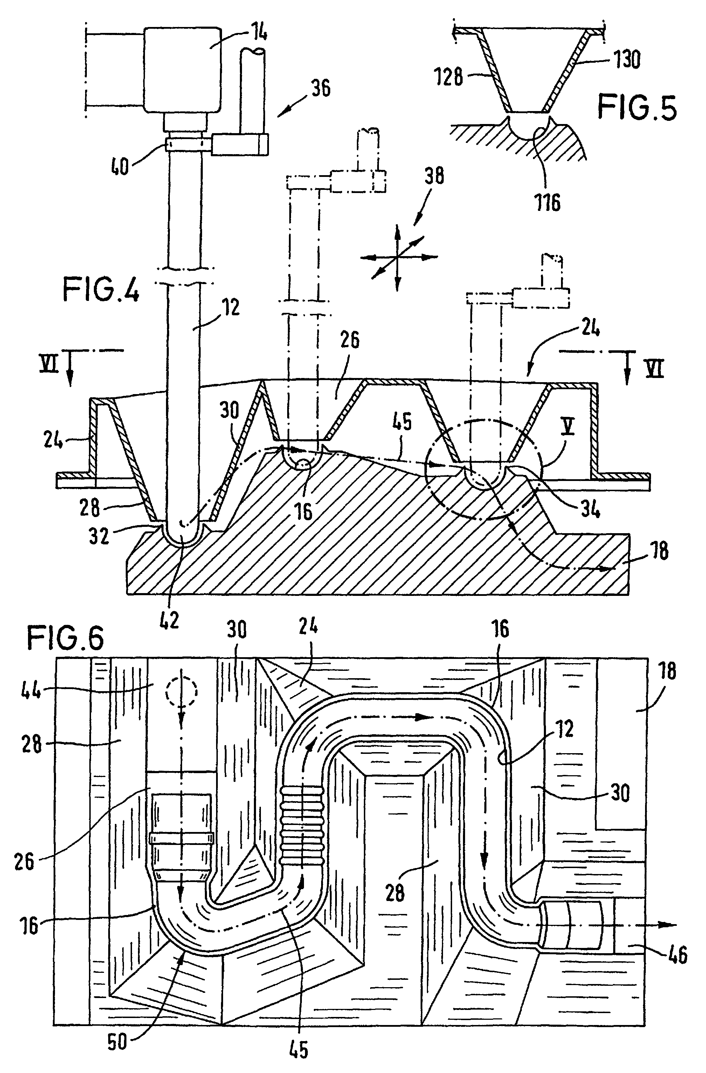

Insbesondere Fig. 6 läßt erkennen, daß das Formnest 16 im unteren Formteil 18 einen entsprechend der Ausgestaltung des Hohlkörpers 10 im Raum mehrfach gekrümmten Verlauf aufweist, der es erfordert, daß der Vorformling diesem Verlauf genau folgend in das Formnest 16 eingebracht wird, wenn ein Abquetschen von seitlichem überschußmaterial am Vorformling vermieden werden soll. Dies bedeutet, daß der Vorformling einen äußeren Durchmesser aufweist, der nicht größer, sondern durchweg kleiner ist als der Durchmesser bzw. die größte Breite des Formnestes 16. Hierbei ist allerdings zu berücksichtigen, daß der Vorformling normalerweise beim Einlegen in das Formnest 16 nicht über seine gesamte Länge einen absolut kreisförmigen und gleichmäßigen Querschnitt aufweist, obwohl er unter einem geringen inneren Überdruck gehalten wird, der gegebenenfalls ein Zusammenfallen des Vorformlings verhindert.

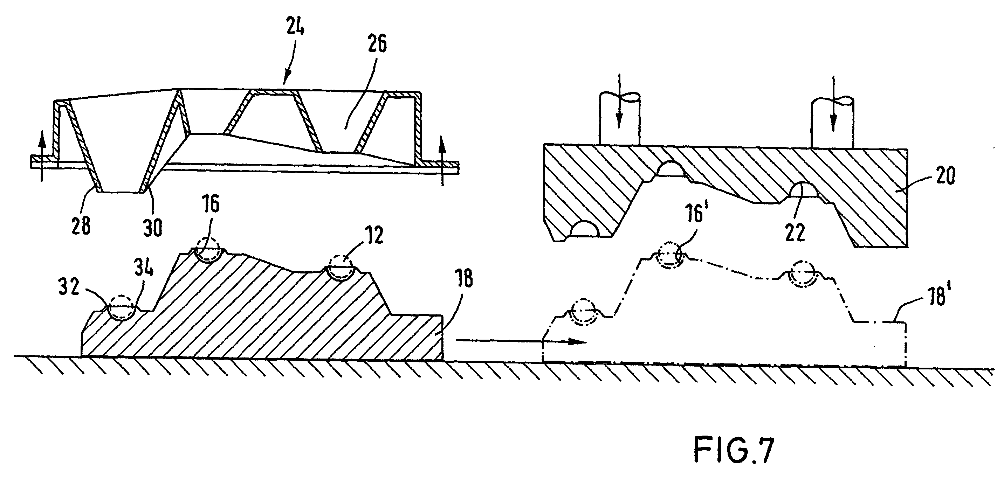

Das untere Formteil 18 ist zwischen der in Fig. 7 links ausgezogen dargestellten Position, die der Position gemäß den Fig. 4 und 6 entspricht, und der in Fig. 7 rechts strichpunktiert dargestellten Position 18' in horizontaler Ebene hin- und herverschiebbar angeordnet. In der rechten Position 18' befindet sich das untere Formteil unterhalb des oberen Formteils 20, welches zwischen einer oberen Position, welche in Fig. 7 dargestellt ist, und einer unteren Position, in welcher es an dem unteren Blasformteil 18 anliegt, hin- und herverschiebbar ist. Bei in der unteren Position befindlichem oberen Formteil 20 ist die Blasform geschlossen, wobei das im unteren Blasformteil 18 befindliche Formnest 16 bzw. 16' sich mit dem im oberen Blasformteil 20 befindlichen Formnest 22 zum Gesamt-Formnest ergänzt, innerhalb dessen der Vorformling 12 zum fertigen Hohlkörper aufgeweitet wird.

In der in den Fig. 4 und 6 sowie ausgezogen in Fig. 7 dargestellten Position des unteren Formteils 18 ist dieses seitlich gegenüber dem oberen Formteil 20 verschoben, so daß es von oben zugänglich ist, um den Vorformling 12 in das Formnest 16 einbringen zu können. Zu diesem Zweck ist unmittelbar oberhalb des in der Aufnahmeposition befindlichen unteren Formteils 18 eine Führungsschablone 24 angeordnet, die als unten offene Rinne 26 verstanden werden kann, die sich im Querschnitt von oben nach unten verengt und deren Längsverlauf zumindest im unteren engsten Bereich dem Längsverlauf des Formnestes 16 entspricht. Dabei ist bei der Ausführung gemäß den Fig. 4, 6 und 7 die Anordnung so getroffen, daß die Breite im unteren, engsten Bereich der Rinne 26, also der innere Abstand der beiden die Rinne 26 begrenzenden Wände 28, 30 etwa dem Abstand der beiden darunter befindlichen Kanten 32, 34 entspricht, die das Formnest 16 im unteren Formteil 18 begrenzen.

Dem Extrusionskopf 14 ist eine Greifereinrichtung 36 zugeordnet, die räumlich, wie dies durch die Pfeile 38 angedeutet ist, bewegt werden kann. Die Greifereinrichtung 36 dient dazu, mittels der Greiferteile 40 den vom Extrusionskopf 14 herunterhängenden Vorformling 12 an seinem oberen Endbereich zu erfassen, so daß er von dem aus dem Extrusionskopf 14 nachströmendem Material abgetrennt, ggf. abgerissen und dann beispielsweise zunächst senkrecht zur Bildebene der Fig. 4, in Richtung auf das in der Aufnahmeposition befindliche untere Formteil 18 transportiert und nach Erreichen der Ausgangsposition für das Einlegen in die Rinne 26 der Führungsschablone 24 eingebracht werden kann. Bei dem in der Zeichnung dargestellten Ausführungsbeispiel erfolgt dies in der Weise, daß das freie Ende 42 des Vorformlings 12 beginnend im Bereich des Endes 44 der Rinne 26 in die Führungsschablone 24 durch eine entsprechende Absenkbewegung der Greifereinrichtung 36 eingelegt und dann dem Verlauf der Rinne 26 bzw. des Formnestes 16 folgend unter kontinuierlicher weiterer Absenkung, wie dies in Fig. 4 strichpunktiert dargestellt ist, etwa der Linie 45 (Fig. 4 und 6) folgend fortlaufend in der Rinne 26 abgelegt wird, bis die Greifereinrichtung 36 bei Erreichen ihrer tiefsten Position oberhalb des anderen Endbereiches 46 der Rinne 26 bzw. des Formnestes 16 durch Öffnen der Greiferteile 40 den Vorformling freigibt, so daß dieser über seine gesamte Länge sich in der Rinne 26 der Führungsschablone 24 bzw. dem darunter befindlichen Formnest 16 des unteren Formteiles 18 befindet.

Insbesondere Fig. 4 der Zeichnung läßt erkennen, daß aufgrund des sich nach oben erweiternden Querschnitts der Rinne 26 der Führungsschablone 24 die Genauigkeit, mit welcher der Vorformling 12 durch die Greifereinrichtung 36 in der Führungsschablone 24 abgelegt werden muß, nicht sehr groß zu sein braucht, da die beiden Wände 28, 30 der Rinne 26 den Vorformling im Verlauf der Abwärtsbewegung desselben in der Rinne zwangsläufig zu dem darunter befindlichen Formnest 16 ausrichten, so daß der Vorformling in jedem Fall beim Auftreffen auf der Begrenzungswandung des Formnestes 16 in diesem die richtige Position einnimmt. Ggf. besteht auch bei hochviskosen Materialien die Möglichkeit, durch zusätzliche Maßnahmen den Schlauch, nachdem er in der Rinne 26 abgelegt worden ist, nach unten in das Formnest zu schieben, wobei durch einen geringen inneren Überdruck im Vorformling vermieden werden kann, daß dieser dabei eine unzulässige Verformung erfährt. Die Stützluft kann in üblicher Weise durch eine Düse in den Vorformling 12 eingeführt werden, die zu Beginn des Einlegevorganges in das untere freie Ende des Vorformlings 12 eingeführt wird, der daraufhin in geeigneter Weise, beispielsweise durch andere Greifermittel, durch Anpressen an die Wandung der Düse verschlossen wird. Es handelt sich hierbei um an sich bekannte Maßnahmen, die keiner näheren Erläuterung bedürfen.

Nach Beendigung des Einlegevorganges wird die Führungsschablone 24 in geeigneter Weise vom unteren Blasformteil 18 entfernt. Dies kann durch eine Verschiebung nach oben erfolgen, wie dies in Fig. 7 dargestellt ist. Es besteht aber auch die Möglichkeit, die Führungsschablone 24 in anderer Weise, z. B. durch eine Schwenkbewegung, aus dem Bereich des unteren Blasformteiles 18 zu entfernen, welches dann nach rechts in die in Fig. 7 strichpunktiert dargestellte Position 18' verschoben wird. Durch die bereits erwähnte Absenkbewegung des oberen Formteils 20 wird dann die Blasform geschlossen, um den Vorformling durch inneren Überdruck zum fertigen Hohlkörper aufzuweiten.

Bei der Ausführungsform gemäß Fig. 5, die in allen wesentlichen Teilen mit der Ausführungsform gemäß den Fig. 4, 6 und 7 übereinstimmt, so daß für gleiche Teile auch gleiche, jeweils um 100 höhere Bezugszeichen verwendet werden, sind die beiden einander gegenüberliegenden Wände 128, 130 so angeordnet, daß die untere Öffnung etwas weniger breit ist als die breiteste Stelle des Formnestes 116. Bei der Ausführungsform gemäß Fig. 5 muß demzufolge auch der maximale Durchmesser des Vorformlings ggf. etwas kleiner sein. Dies kann den vorteilhaften Effekt haben, daß in Krümmungen des Formnestes, die einen sehr kleinen Radius haben, wie beispielsweise die Krümmung 50 in Fig. 6, der Vorformling trotz der aufgrund der Krümmung an deren Innenseite erfolgenden Stauchung seiner Wandung glatt und ungehindert in das Formnest gelangt, insbesondere nicht an dessen die Krümmung innenseitig begrenzende Wandung unter Druckbeanspruchung zur Anlage kommt.

Die Führungsschablone 24 kann auf einfache Weise aus Blech oder Kunststoff hergestellt werden. Sie stellt ein einfaches Hilfsmittel dar, welches ohne ins Gewicht fallende zusätzliche Maßnahmen und ohne Beeinträchtigung des betrieblichen Ablaufes verwendet werden kann, um das Einlegen des Vorformlings 12 in das untere Formteil 18 insbesondere bei sehr kompliziertem Verlauf des Formnestes zu erleichtern und zu beschleunigen.

Aufgrund der Topographie des unteren Formteils wird die untere Begrenzung der Führungsschablone 24 normalerweise nicht in einer Ebene liegen. Dies schließt aber nicht aus, daß die obere Begrenzung der Führungsschablone in einer Ebene liegt, wenngleich dies auch aus Herstellungsgründen nicht unbedingt erforderlich ist. Andererseits besteht kein Nachteil darin, daß die Rinne 26 über ihren Längsverlauf unterschiedliche Tiefen aufweist. Der wesentliche Punkt besteht darin, daß die Rinne oberseitig so breit ist, daß das Einführen des Schlauches in die Rinne ohne Schwierigkeiten auch bei komplizierter Gestalt des Formnestes möglich ist.

## Patentansprüche

1. Verfahren zum Herstellen von langgestreckten gekrümmten Hohlkörpern (10), insbesondere mehrachsig gekrümmten Rohren, die zumindest teilweise aus thermoplastischem Kunststoff bestehen, bei welchem zunächst ein Vorformling (12) aus dem Extrusionskopf (14) eines Extrusionssystems extrudiert und von einem im Raum bewegbaren Greifer (36) erfaßt wird und vom Formnest (16) eines Formteils (18) einer unterteilten Blasform aufgenommen wird, welche so angeordnet ist, daß die den Vorformling tragende Fläche des Formnestes (16) wenigstens auf Teilen ihrer Längserstreckung eine horizontale Komponente enthält, worauf nach Schließen der Blasform der Vorformling (12) in derselben durch inneren Überdruck gegen die Wandung des Formnestes der geschlossenen Blasform gedrückt wird, **dadurch gekennzeichnet, daß** der Vorformling (12) durch den Greifer (36) in den Bereich einer oberhalb des Formnestes (16) des den Vorformling (12) aufnehmenden Formteils (18) angeordneten Führungsschablone (24) gebracht und durch Absenken des Greifers sowie durch eine dem Verlauf der Führungsschablone (24) folgende Bewegung in die Führungsschablone eingebracht wird, die zwei in einem Abstand voneinander befindliche Wände (28, 30) aufweist, die quer zum Längsverlauf des Formnestes (16) einen von unten nach oben sich vergrößernden Abstand aufweisen, wobei der Abstand an der Unterseite der Führungsschablone (24) etwa der maximalen Breite des Formnestes (16) entspricht und der Vorformling seine endgültige Ausrichtung zum Formnest (16) des Blasformteiles (18) durch die Führungsschablone (24) erhält, durch deren untere Öffnung er in das Formnest (16) gelangt.

2. Verfahren nach Anspruch 1, **dadurch gekennzeichnet, daß** das freie Ende (42) des Vorformlings (12) zu Beginn des Einlegevorganges durch eine Halteeinrichtung erfaßt und fixiert wird.

3. Verfahren nach Anspruch 1, **dadurch gekennzeichnet, daß** der Vorformling (12) während des Einlegens unter innerem Überdruck steht.

4. Verfahren nach Anspruch 1, **dadurch gekennzeichnet, daß** der Vorformling durch ein zusätzliches, von oben durch die Führungsschablone auf ihn einwirkendes Mittel in das Formnest des Formteils eingedrückt wird.

5. Verfahren nach Anspruch 4, **dadurch gekennzeichnet, daß** das Eindrücken nach Beendigung des durch den Greifer bewirkten Einlegens des Vorformlings in die Führungsschablone durchgeführt wird.

6. Verfahren nach Anspruch 4, **dadurch gekennzeichnet, daß** das Eindrücken des Vorformlings in das Formnest im Verlauf des durch den Greifer bewirkten Einlegens in die Führungsschablone diesem folgend durchgeführt wird.

7. Extrusions-Blasvorrichtung zum Herstellen von langgestreckten gekrümmten Hohlkörpern (10), beispielsweise mehrachsig gekrümmten Rohren, die zumindest teilweise aus thermoplastischem Kunststoff bestehen, mit einem einen Extrusionskopf (14) aufweisenden Extrusionssystem und einer wenigstens zweigeteilten Blasform (18, 20), deren Formnest (16, 22) der gewünschten Form des Hohlkörpers (10) entspricht und bei der Aufnahme des in das Formnest (16) eines Formteils (18) einzulegenden schlauchförmigen Vorformlings (12) so angeordnet ist, daß die den Vorformling tragende Fläche des Formnestes (16) wenigstens auf Teilen ihrer Längserstreckung eine horizontale Komponente enthält, wobei ein Greifer (36) vorgesehen ist, der im Raum bewegbar ist und den Vorformling auffasst, **dadurch gekennzeichnet, daß** eine Führungsschablone (24) für den Vorformling vorgesehen ist, die entlang dem Formnest (16) des in der Aufnahmeposition befindlichen, den Vorformling aufnehmenden Formteils (18) der Blasform oberhalb desselben verläuft und zwei einen Abstand voneinander aufweisende Wandteile (28, 30) aufweist, die quer zum Längsverlauf des Formnestes (16) einen von unten nach oben sich vergrößernden Abstand aufweisen, der an der offenen Unterseite der Führungsschablone (24) zumindest etwa dem Durchmesser des Vorformlings (12) entspricht, wobei der Greifer (36) den Vorformling vom Extrusionskopf abnimmt und in die Führungsschablone (24) einbringt und dabei dem Verlauf der Führungsschablone (24) folgt und die Führungsschablone (24) zwischen einer Betriebsposition, in welcher sie sich oberhalb des Formnestes (16) befindet, und einer Position, in welcher sie sich außerhalb des Bewegungsbereiches der Blasformteile (18, 20) bei deren Schließbewegungen befindet, bewegbar ist.

8. Extrusions-Blasvorrichtung nach Anspruch 7, **dadurch gekennzeichnet, daß** die untere Öffnung der Führungsschablone (24) eine Breite aufweist, die etwas kleiner ist als die Breite des Formnestes (116).

## Claims

1. A method of producing elongate bent hollow bodies (10), especially multiaxially bent tubes, that consist at least partially of thermoplastics material, in which method a parison (12) is first extruded from the extrusion head (14) of an extrusion system and is gripped by a gripper (36) movable in three dimensions and is received by the mould cavity (16) of a mould part (18) of a split blowing mould arranged in such a manner that the surface of the mould cavity (16) carrying the parison comprises a horizontal component over at least parts of its length, whereupon, after closure of the blowing mould, the parison (12) therein is pressed by internal overpressure against the wall of the mould cavity of the closed blowing mould, **characterised in that** the parison (12) is brought by the gripper (36) into the region of a guide template (24) arranged above the mould cavity (16) of the mould part (18) receiving the parison (12) and is introduced into the guide template (24) by lowering the gripper and by a movement that follows the course of the guide template (24), which guide template (24) has two walls (28, 30) spaced from each other which have a spacing transversly to the length of the mould cavity (16) which increases from the bottom to the top, the spacing at the lower side of the guide template (24) approximately corresponding to the maximum width of the mould cavity (16) and the parison being given its final orientation relative to the mould cavity (16) of. the blowing mould part (18) by the guide template (24) through the lower opening of which it passes into the mould cavity (16).

2. A method according to claim 1, **characterised in that** the free end (42) of the parison (12) is gripped and fixed by a holding device at the beginning of the insertion operation.

3. A method according to claim 1, **characterised in that** the parison (12) is under internal overpressure during insertion.

4. A method according to claim 1, **characterised in that** the parison is pressed into the mould cavity of the mould part by an additional means which acts on it from above through the guide template.

5. A method according to claim 4, **characterised in that** pressing-in is carried out after insertion of the parison into the guide template by the gripper has been completed.

6. A method according to claim 4, **characterised in that** pressing of the parison into the mould cavity is carried out in the course of insertion into the guide template by the gripper, following that insertion.

7. An extrusion-blow-moulding apparatus for producing elongate bent hollow bodies (10), for example multiaxially bent tubes, that consist at least partially of thermoplastics material, comprising an extrusion system having an extrusion head (14) and a blowing mould (18, 20) divided into at least two parts, the mould cavity (16, 22) of which corresponds to the desired shape of the hollow body (10) and is so arranged, when receiving the tubular parison (12) which is to be placed in the mould cavity (16) of one mould part (18), that the surface of the mould cavity (16) carrying the parison comprises a horizontal component over at least parts of its length, a gripper (36) being provided which is movable in three dimensions and which grips the parison, **characterised in that** a guide template (24) is provided for the parison, which guide template (24) extends along and above the mould cavity (16) of that mould part (18) of the blowing mould which is in the receiving position and receives the parison, and which guide template (24) has two wall parts (28, 30) which are spaced from each other and which have a spacing transversely to the length of the mould cavity (16) which increases from the bottom to the top and which, at the open lower side of the guide template (24), at least corresponds approximately to the diameter of the parison (12), the gripper (36) taking the parison from the extrusion head and introducing it into the guide template (24) while following the course of the guide template (24), and the guide template (24) being movable between an operating position, in which it is disposed above the mould cavity (16), and a position in which it is disposed outside the range of movement of the blowing mould parts (18, 20) during their closure movements.

8. An extrusion-blow-moulding apparatus according to claim 7, **characterised in that** the lower opening of the guide template (24) has a width that is slightly smaller than the width of the mould cavity (116).

## Revendications

1. Procédé pour la fabrication de corps creux allongés cintrés (10), en particulier de tubes cintrés selon plusieurs axes, qui sont constitués au moins en partie en matière thermoplastique, pour lequel une préforme (12) est tout d'abord extrudée par la tête d'extrusion (14) d'un système d'extrusion et est saisie par un preneur (36) mobile dans l'espace, recueillie par l'empreinte (16) d'une partie de moule (18) d'un moule de soufflage en plusieurs parties, laquelle est disposée de telle sorte que la surface de l'empreinte (16) du moule portant la préforme comprenne au moins sur des parties de son tracé longitudinal une composante horizontale, sur laquelle la préforme est pressée par la pression intérieure contre la paroi de l'empreinte du moule de soufflage fermé après la fermeture dudit moule de soufflage, **caractérisé en ce que** la préforme (12) est saisie par le preneur (36) et est amenée dans la zone d'un gabarit de guidage (24) disposé au-dessus de l'empreinte (16) de moule de la partie de moule (18) qui accueille la préforme (12) et, par abaissement du preneur ainsi que par un mouvement qui suit le tracé du gabarit de guidage (24), est introduite dans le gabarit de guidage, qui présente deux parois (28, 30) qui se trouvent à une certaine distance l'une de l'autre, qui présentent transversalement au tracé de l'empreinte (16) du moule une distance qui augmente de bas en haut, cette distance correspondant environ à la face inférieure du gabarit de guidage (24) à la largeur maximale de l'empreinte (16) du moule, et la préforme obtenant son orientation définitive par rapport à l'empreinte (16) du moule dans la partie (18) du moule de soufflage par le gabarit de guidage (24), par l'ouverture inférieure duquel elle accède dans l'empreinte (16) du moule.

2. Procédé selon la revendication 1, **caractérisé en ce que** l'extrémité libre (42) de la préforme (12) est saisie et fixée par un dispositif de maintien au début du processus de mise en place.

3. Procédé selon la revendication 1, **caractérisé en ce que** la préforme (12) se trouve sous une pression intérieure pendant la mise en place.

4. Procédé selon la revendication 1, **caractérisé en ce que** la préforme est enfoncée dans l'empreinte de la partie de moule par un moyen supplémentaire agissant sur elle depuis le haut à travers le gabarit de guidage.

5. Procédé selon la revendication 4, **caractérisé en ce que** l'enfoncement est effectué après la fin de l'introduction de la préforme dans le gabarit de guidage, exécutée par le preneur.

6. Procédé selon la revendication 4, **caractérisé en ce que** l'enfoncement de la préforme dans l'empreinte du moule est effectué au cours de l'introduction de la préforme dans le gabarit de guidage, exécutée par le preneur, à la suite de ladite opération.

7. Dispositif d'extrusion et soufflage pour la fabrication de corps creux allongés et cintrés (10), par exemple de tubes cintrés selon plusieurs axes, qui sont constitués au moins en partie en matière thermoplastique, avec un système d'extrusion comportant une tête d'extrusion (14), et un moule de soufflage en au moins deux parties (18, 20), dont l'empreinte (16, 22) correspond à la forme désirée du corps creux (10) et qui, lors de la réception d'une préforme (12) en forme de paraison devant être introduite dans l'empreinte (16) d'une partie de moule (18), est disposé de telle sorte que la surface de l'empreinte (16) du moule portant la préforme contient au moins sur des parties de son tracé longitudinal une composante horizontale, tandis qu'un preneur (36), qui est mobile dans l'espace et qui saisit la préforme, est prévu, **caractérisé en ce qu'**un gabarit de guidage (24) pour la préforme est prévu, qui s'étend au-dessus du moule de soufflage, le long de l'empreinte (16) de la partie du moule (18) de soufflage qui se trouve en position de réception et qui accueille la préforme, et qui présente deux parties de paroi (28, 30) à une certaine distance l'une de l'autre, et qui présentent transversalement au tracé longitudinal de l'empreinte (16) du moule une distance croissante de bas en haut, distance qui correspond à la face inférieure du gabarit de guidage (24) au moins à peu près au diamètre de la préforme (12), tandis que le preneur (36) enlève la préforme de la tête d'extrusion et l'introduit dans le gabarit de guidage (24), en suivant ce faisant le tracé du gabarit de guidage (24), et que le gabarit de guidage (24) est mobile entre une position de travail, dans laquelle il se trouve au-dessus de l'empreinte du moule (16), et une position dans laquelle il se trouve en dehors de la zone de déplacement des parties du moule de soufflage (18, 20) lors de leur mouvement de fermeture.

8. Dispositif d'extrusion et soufflage selon la revendication 7, **caractérisé en ce que** l'ouverture inférieure du gabarit de guidage (24) présente une largeur quelque peu inférieure à la largeur de l'empreinte du moule (116).
